(19) Europäisches Patentamt
European Patent Office
Office européen des brevets

(11) **EP 3 076 671 A1**

(12) **EUROPEAN PATENT APPLICATION**
published in accordance with Art. 153(4) EPC

(43) Date of publication:
**05.10.2016 Bulletin 2016/40**

(21) Application number: **14893107.4**

(22) Date of filing: **20.11.2014**

(51) Int Cl.:
***H04N 19/61*** *(2014.01)*

(86) International application number:
**PCT/CN2014/091769**

(87) International publication number:
**WO 2015/180428 (03.12.2015 Gazette 2015/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.05.2014 CN 201410233802**

(71) Applicant: **Huawei Technologies Co., Ltd Shenzhen, Guangdong 518129 (CN)**

(72) Inventors:
• **ZHAI, Haichang**
**Shenzhen**
**Guangdong 518129 (CN)**

• **LIU, Yuanwen**
**Shenzhen**
**Guangdong 518129 (CN)**
• **LAI, Changcai**
**Shenzhen**
**Guangdong 518129 (CN)**
• **SONG, Yang**
**Shenzhen**
**Guangdong 518129 (CN)**

(74) Representative: **Pfenning, Meinig & Partner mbB**
**Patent- und Rechtsanwälte**
**Theresienhöhe 11a**
**80339 München (DE)**

(54) **VIDEO CODING METHOD AND VIDEO CODING DEVICE FOR INTRA-FRAME PREDICTION CODING**

(57) Embodiments of the present invention provide a video coding method for INTRA and a video coding apparatus. The method includes: performing a traversal prediction on a current-layer coding unit CU whose depth is N to acquire a prediction result of the current-layer CU, where the traversal prediction does not include prediction performed by using the current-layer CU as a prediction unit, and the prediction result includes a best CU division mode that is of the current-layer CU and in the traversal prediction, a prediction mode of a sub-CU that is divided from the current-layer CU according to the best CU division mode, and a syntax element that is needed for coding of the current-layer CU; and if the best CU division mode is to divide the current-layer CU into four sub-CUs whose depth is N+1, and prediction modes of the four sub-CUs whose depth is N+1 are the same, performing coding, by using the current-layer CU as a coding unit, on the current-layer CU according to the best CU division mode, the prediction mode of the CU that is divided from the current-layer CU according to the best CU division mode, and the syntax element that is needed for coding of the current-layer CU.

Perform traversal prediction on a current-layer coding unit CU whose depth is N to acquire a prediction result of the current-layer CU, where the traversal prediction does not include a prediction performed by using the current-layer CU as a prediction unit, the prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, and a value of N is 0, 1, or 2 — 501

If the best CU division mode is to divide the current-layer CU into four sub-CUs whose depth is N+1, and prediction modes of the four sub-CUs whose depth is N+1 are the same, perform coding, by using the current-layer CU as a coding unit, on the current-layer CU according to the best CU division mode, the prediction mode of the CU that is divided from the current-layer CU according to the best CU division mode, and the syntax element that is needed for coding of the current-layer CU — 502

FIG. 5

**EP 3 076 671 A1**

**Description**

This application claims priority to Chinese Patent Application No. 201410233802.7, filed with the Chinese Patent Office on May 29, 2014 and entitled "VIDEO CODING METHOD FOR INTRA-FRAME PREDICTIVE CODING AND VIDEO CODING APPARATUS", which is incorporated herein by reference in its entirety.

**TECHNICAL FIELD**

Embodiments of the present invention relate to the graphics processing field, and more specifically, to a video coding method for intra-frame predictive coding and a video coding apparatus.

**BACKGROUND**

When coding is performed by using High Efficiency Video Coding (High Efficiency Video Coding, HEVC), coding is performed one by one on a per-coding tree unit (Coding Tree Unit, CTU) basis. Each CTU may be divided into different coding units (Coding Unit, CU), and each CU may be further divided into different prediction units (Prediction Unit, PU). During prediction, the prediction is performed according to a size of the PU. During coding, coding is performed according to a size of the CU. In a prediction process of the PU, transformation is performed according to a size of a transform unit (Transform Unit, TU).

In a current HEVC standard version Recommendation ITU-T H.265, an intra-frame predictive coding (INTRA) prediction is to predict a current PU by using a reconstruction pixel value around the current PU. In the INTRA prediction, each PU block has 35 luma (Luma) prediction modes and five chroma (Chroma) prediction modes. An objective of the INTRA prediction is to find out one best Luma prediction mode and one best Chroma prediction mode that are of each PU; to find out a best prediction manner (an INTRA manner or an INTER manner) of each CU in combination with INTER; and finally to select a best CU layer to perform coding. Because there is an excessively large quantity of prediction layers, computing is relatively complex.

Therefore, an appropriate solution is needed to reduce HEVC coding complexity.

**SUMMARY**

Embodiments of the present invention provide a video coding method for intra-frame predictive coding and a video coding apparatus, which can reduce coding complexity to some extent.

According to a first aspect, a video coding method for intra-frame predictive coding is provided, where the method includes: performing a traversal prediction on a current-layer coding unit CU whose depth is N to acquire a prediction result of the current-layer CU, where the traversal prediction does not include prediction performed by using the current-layer CU as a prediction unit, the prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, and a value of N is 0, 1, or 2; and if the best CU division mode is to divide the current-layer CU into four sub-CUs whose depth is N+1, and prediction modes of the four sub-CUs whose depth is N+1 are the same, performing coding, by using the current-layer CU as a coding unit, on the current-layer CU according to the best CU division mode, the prediction mode of the CU that is divided from the current-layer CU according to the best CU division mode, and the syntax element that is needed for coding of the current-layer CU.

With reference to the first aspect, in a first possible implementation manner, specific implementation is that when the value of N is 0, the current-layer CU whose depth is N is a CU64, and the sub-CU whose depth is N+1 is a CU32; or when the value of N is 1, the current-layer CU whose depth is N is a CU32, and the sub-CU whose depth is N+1 is a CU16; or when the value of N is 2, the current-layer CU whose depth is N is a CU16, and the sub-CU whose depth is N+1 is a CU8.

According to a second aspect, a video coding method for intra-frame predictive coding is provided, where the method includes: performing a traversal prediction on a current-layer coding unit CU whose depth is N to acquire a first prediction result of the current-layer CU, where the traversal prediction does not include prediction performed by using the current-layer CU as a prediction unit, the first prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, the prediction mode includes a luma mode and a chroma mode, and a value of N is 0, 1, or 2; if the best CU division mode is to divide the current-layer CU into four sub-CUs whose depth is N+1, and a difference between luma modes of any two sub-CUs of the four sub-CUs whose depth is N+1 is less than a preset threshold, determining a second prediction mode according to prediction modes of the four sub-CUs whose depth is N+1, where a luma mode in the second prediction mode is determined according to luma modes of the four sub-CUs whose depth is N+1, and a chroma mode in the second prediction mode is determined according to chroma modes of the four sub-CUs whose depth is N+1; performing prediction, by using the second prediction mode as a specified prediction mode, on the four sub-CUs whose depth is N+1 to acquire a second prediction result, where the second prediction result includes a syntax element that is needed for coding of the current-layer CU in the best CU division mode and the second prediction mode; and performing coding, by using the current-layer CU as a coding unit, on the current-layer CU according to the best CU division mode, the second prediction mode, and the syntax element that is needed for coding of the current-layer CU and is in the second prediction result.

With reference to the second aspect, in a first possible implementation manner, specific implementation is that when the value of N is 0, the current-layer CU whose depth is N is a CU64, and the sub-CU whose depth is N+1 is a CU32; or when the value of N is 1, the current-layer CU whose depth is N is a CU32, and the sub-CU whose depth is N+1 is a CU16; or when the value of N is 2, the current-layer CU whose depth is N is a CU16, and the sub-CU whose depth is N+1 is a CU8.

With reference to the second aspect or the first possible implementation manner of the second aspect, in a second possible implementation manner, that a luma mode in the second prediction mode is determined according to luma modes of the four sub-CUs whose depth is N+1 is specifically implemented as follows: the luma mode in the second prediction mode is a maximum value of the luma modes in the prediction modes of the four sub-CUs whose depth is N+1; or the luma mode in the second prediction mode is a minimum value of the luma modes in the prediction modes of the four sub-CUs whose depth is N+1; or the luma mode in the second prediction mode is an intermediate value of the luma modes in the prediction modes of the four sub-CUs whose depth is N+1; or the luma mode in the second prediction mode is a minimum integer that is not less than an average value of the luma modes; or the luma mode in the second prediction mode is a maximum integer that is not greater than an average value of the luma modes, where the luma average value is one of an arithmetic average value, a geometric average value, a harmonic average value, a weighted average value, or a square average value that is of the luma modes of the four sub-CUs whose depth is N+1.

With reference to the second aspect, or the first possible implementation manner of the second aspect, or the second possible implementation manner of the second aspect, in a third possible implementation manner, that a chroma mode in the second prediction mode is determined according to chroma modes of the four sub-CUs whose depth is N+1 is specifically implemented as follows: the chroma mode in the second prediction mode is one of the luma modes of the four sub-CUs whose depth is N+1 and that are of the current-layer CU.

According to a third aspect, a video coding apparatus is provided, where the video coding apparatus includes: an intra-frame predictive coding unit, configured to perform a traversal prediction on a current-layer coding unit CU whose depth is N to acquire a prediction result of the current-layer CU, where the traversal prediction does not include prediction performed by using the current-layer CU as a prediction unit, the prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, and a value of N is 0, 1, or 2; and a video coding unit, configured to: if the best CU division mode is to divide the current-layer CU into four sub-CUs whose depth is N+1, and prediction modes of the four sub-CUs whose depth is N+1 are the same, perform coding, by using the current-layer CU as a coding unit, on the current-layer CU according to the best CU division mode, the prediction mode of the CU that is divided from the current-layer CU according to the best CU division mode, and the syntax element that is needed for coding of the current-layer CU.

With reference to the third aspect, in a first possible implementation manner, the video coding apparatus further includes: a first determining unit, configured to determine whether the best CU division mode is to divide the current-layer CU into the four sub-CUs whose depth is N+1; and a second determining unit, configured to determine whether the prediction modes of the four sub-CUs whose depth is N+1 are the same.

With reference to the third aspect or the first possible implementation manner of the third aspect, in a second possible implementation manner, specific implementation is that when the value of N is 0, the current-layer CU whose depth is N is a CU64, and the sub-CU whose depth is N+1 is a CU32; or when the value of N is 1, the current-layer CU whose depth is N is a CU32, and the sub-CU whose depth is N+1 is a CU16; or when the value of N is 2, the current-layer CU whose depth is N is a CU16, and the sub-CU whose depth is N+1 is a CU8.

According to a fourth aspect, a video coding apparatus is provided, where the video coding apparatus includes: an intra-frame predictive coding unit, configured to perform a traversal prediction on a current-layer coding unit CU whose depth is N to acquire a first prediction result of the current-layer CU, where the traversal prediction does not include prediction performed by using the current-layer CU as a prediction unit, the first prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, the prediction mode includes a luma mode and a chroma mode, and a value of N is 0, 1, or 2; a determining unit, configured to: if the best CU division mode is to divide the current-layer CU into four sub-CUs whose depth is N+1, and a difference between luma modes of any two sub-CUs of the four sub-CUs whose depth is N+1 is less than a preset threshold, determine a second prediction mode according to prediction modes of the four sub-CUs whose depth is N+1, where a luma mode in the second prediction mode is determined according to luma modes of the four sub-CUs whose depth is N+1, and a chroma mode in the second prediction mode is determined according to chroma modes of the four sub-CUs whose depth is N+1, where the intra-frame predictive coding unit is further configured to perform prediction, by using the second prediction mode as a specified prediction mode, on the four sub-CUs whose depth is N+1 to acquire a second prediction result, where the second prediction result includes a syntax element that is needed for coding of the current-layer CU in the best CU division mode and the second prediction mode; and a video coding unit, configured to perform coding, by using the current-layer CU as a coding unit, on the current-layer CU according to the best CU division mode, the second prediction mode, and the syntax element that is needed for coding of the current-layer CU and is in the second prediction result.

With reference to the fourth aspect, in a first possible implementation manner, the video coding apparatus further includes: a first determining unit, configured to determine whether the best CU division mode is to divide the current-layer CU into the four sub-CUs whose depth is N+1; and a second determining unit, configured to determine whether a difference between luma modes of any two sub-CUs of the four sub-CUs whose depth is N+1 is less than the preset threshold.

With reference to the fourth aspect or the first possible implementation manner of the fourth aspect, in a second possible implementation manner, specific implementation is that when the value of N is 0, the current-layer CU whose depth is N is a CU64, and the sub-CU whose depth is N+1 is a CU32; or when the value of N is 1, the current-layer CU whose depth is N is a CU32, and the sub-CU whose depth is N+1 is a CU16; or when the value of N is 2, the current-layer CU whose depth is N is a CU16, and the sub-CU whose depth is N+1 is a CU8.

With reference to the fourth aspect, or the first possible implementation manner of the fourth aspect, or the second possible implementation manner of the fourth aspect, in a third possible implementation manner, the determining unit is specifically configured to determine one of the following values as the luma mode in the second prediction mode: a maximum value of the luma modes of the four sub-CUs whose depth is N+1; or a minimum value of the luma modes of the four sub-CUs whose depth is N+1; or an intermediate value of the luma modes of the four sub-CUs whose depth is N+1; or a minimum integer that is not less than an average value of the luma modes; or a maximum integer that is not greater than an average value of the luma modes, where the luma average value is one of an arithmetic average value, a geometric average value, a harmonic average value, a weighted average value, or a square average value that is of the luma modes of the four sub-CUs whose depth is N+1.

With reference to the fourth aspect, or the first possible implementation manner of the fourth aspect, or the second possible implementation manner of the fourth aspect, or the third possible implementation manner of the fourth aspect, in a fourth possible implementation manner of the fourth aspect, the determining unit is specifically configured to determine, as the chroma mode in the second prediction mode, one of the luma modes of the four sub-CUs whose depth is N+1 and that are of the current-layer CU.

According to the video coding method and the video coding apparatus in the embodiments of the present invention, in a scenario in which during a traversal prediction, prediction is not performed on a current-layer CU, and a best CU division mode is to divide the current-layer CU into four sub-CUs, when prediction modes of the four sub-CUs are the same, coding is performed according to a prediction result of the traversal prediction by using the current-layer CU as a coding unit. Alternatively, when prediction modes of the four sub-CUs are similar, a similar or same prediction mode is specified to perform re-prediction on the four sub-CUs, and coding is performed according to a prediction result of the re-prediction by using the current-layer CU as a coding unit, thereby reducing prediction costs, and reducing coding complexity to some extent.

## BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of an HEVC framework according to an embodiment of the present invention;
FIG. 2 is a diagram of a CTU layered structure according to an embodiment of the present invention;
FIG. 3 is a schematic diagram of a luma mode of HEVC according to an embodiment of the present invention;
FIG. 4 is a schematic diagram of directions of a luma mode 29 according to an embodiment of the present invention;
FIG. 5 is a flowchart of a video coding method for INTRA according to an embodiment of the present invention;
FIG. 6 is a flowchart of a video coding method for INTRA prediction according to an embodiment of the present invention;
FIG. 7 is a flowchart of another video coding method for INTRA according to an embodiment of the present invention;

FIG. 8 is a flowchart of another video coding method for INTRA prediction according to an embodiment of the present invention;

FIG. 9 is a schematic structural diagram of a video coding apparatus according to an embodiment of the present invention;

FIG. 10 is a schematic structural diagram of another video coding apparatus according to an embodiment of the present invention;

FIG. 11 is a schematic structural diagram of a video coder according to an embodiment of the present invention; and

FIG. 12 is a schematic structural diagram of another video coder according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

For ease of understanding the embodiments of the present invention, some elements used in description of the embodiments of the present invention are first described herein.

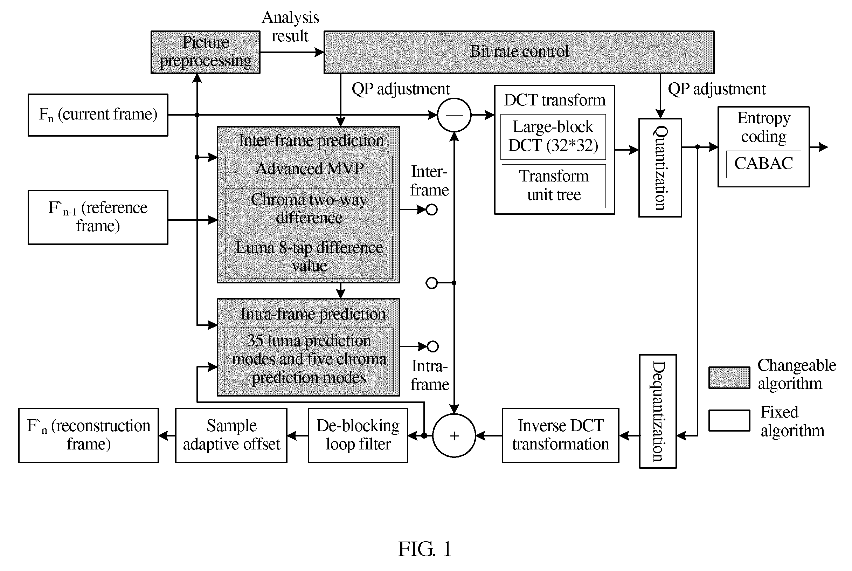

High Efficiency Video Coding (High Efficiency Video Coding, HEVC) is a next-generation video coding standard, a successor to H.264. A core objective of the High Efficiency Video Coding is to double compression efficiency on the basis of H.264/AVC High Profile, that is, to reduce a bit rate of a video stream by 50% at a same level of video and picture quality. A block-based hybrid coding framework is used in HEVC. FIG. 1 shows a schematic diagram of the HEVC coding framework. In FIG. 1, processes in gray boxes are processes with changeable algorithms, and processes in white-box areas are processes with basically fixed algorithms. A method in an embodiment of the present invention mainly relates to a process of intra-frame prediction in the HEVC coding framework.

Coding tree unit (Coding Tree Unit, CTU): is a largest coding unit in HEVC.

Coding unit (Coding Unit, CU): is a coding unit in HEVC, and the CTU may be divided into CUs for coding.

Prediction unit (Prediction Unit, PU): is a prediction unit in HEVC, and the CU may be divided into different PUs for prediction.

Transform unit (Transform Unit, TU): is a transform unit in HEVC, and the CU may be divided into TUs for transformation.

Rate-distortion optimization (Rate Distortion Optimization, RDO): is a basis for determining a best prediction mode in HEVC.

HEVC test model (HEVC Model, HM): is official reference codec engineering of HEVC.

INTRA: is intra-frame predictive coding in which a reference pixel value comes from a same frame.

To better adapt to content of a to-be-coded picture, coding is performed on the to-be-coded picture by using a flexible block structure in HEVC. In HEVC, the block structure includes a CU block structure, a PU block structure, and a TU block structure. During CU division in HEVC, CUs of different sizes are obtained by means of division generally according to a characteristic of the to-be-coded picture by using a quadtree structure, so as to flexibly match the content of the picture to obtain a best coding effect.

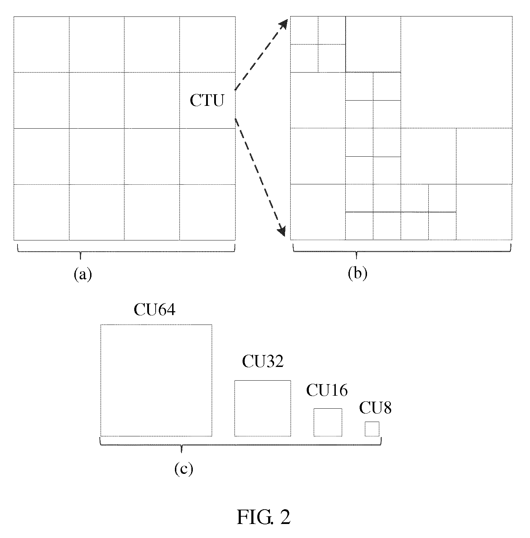

FIG. 2 is a diagram of a CTU layered structure according to an embodiment of the present invention. FIG. 2 includes (a), (b), and (c). (a) is a schematic diagram of CTU division of a to-be-coded picture, (b) is a possible CU division mode of one CTU in the to-be-coded picture (a), and (c) is coding units of different sizes, which are respectively a CU64 (64*64), a CU32 (32*32), a CU16 (16*16), and a CU8 (8*8).

As shown in FIG. 2, the to-be-coded picture (a) may be divided into several CTUs, and one CTU is represented by one grid in (a). The CTU is a largest CU, and a size of each CTU is 64*64. Each CU64 of a size of 64*64 may be divided into four CU32s of a size of 32*32. Each CU32 of a size of 32*32 may be divided into four CU16s of a size of 16*16. Each CU16 of a size of 16*16 may be divided into four CU8s of a size of 8*8. The CU8 of a size of 8*8 is a smallest CU in HEVC. In addition, generally, the CU64 is also referred to as a CU whose depth is 0, or a zeroth-layer CU. The CU32 is referred to as a CU whose depth is 1, or a first-layer CU. The CU16 is referred to as a CU whose depth is 2, or a second-layer CU. The CU8 is referred to as a CU whose depth is 3, or a third-layer CU.

In the prior art, when prediction is performed on one CTU, generally, one best prediction mode is selected at each layer (including the CTU), and then a best CU division mode of the CTU may be selected from best prediction modes at the layers. For example, in (b) of FIG. 2, one CTU may be divided into one CU32, seven CU16s, and 20 CU8s.

A prediction mode of HEVC may include a luma mode and a chroma mode. During prediction mode selection, one luma mode may be selected from 35 luma modes as a luma mode in a prediction mode, and one chroma mode may be selected from five chroma modes as a chroma mode in the prediction mode.

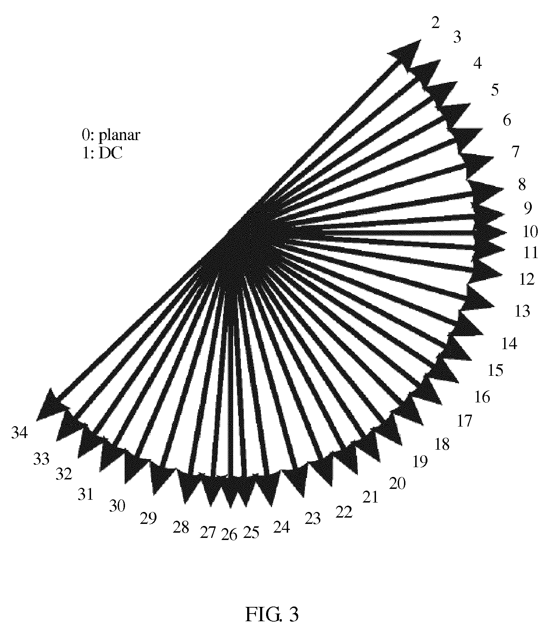

FIG. 3 is a schematic diagram of a luma mode of HEVC according to an embodiment of the present invention.

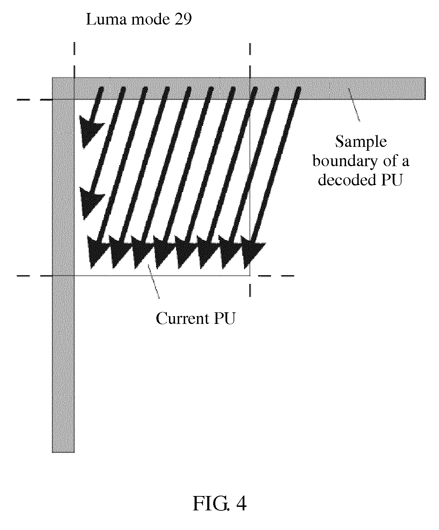

As shown in FIG. 3, HEVC may include 35 different luma modes. On the basis of a direction prediction, 33 different prediction directions are defined in total in intra-frame prediction technologies in HEVC, and a direction prediction value with precision of 1/32 pixel may be obtained, where mode numbers of the prediction directions are 2 to 34. In addition, the luma modes of HEVC further include a DC mode whose serial number is 1, and a planar (Planar) mode whose serial number is 0. An average value of surrounding pixels is used as a prediction value in the DC mode, and the Planar is mainly for a picture that changes evenly. In a specific example, FIG. 4 shows a schematic diagram of directions of a luma mode 29.

In addition, five different chroma modes of HEVC are specifically vertical, horizontal, DC, lower right diagonal, and the same as luma.

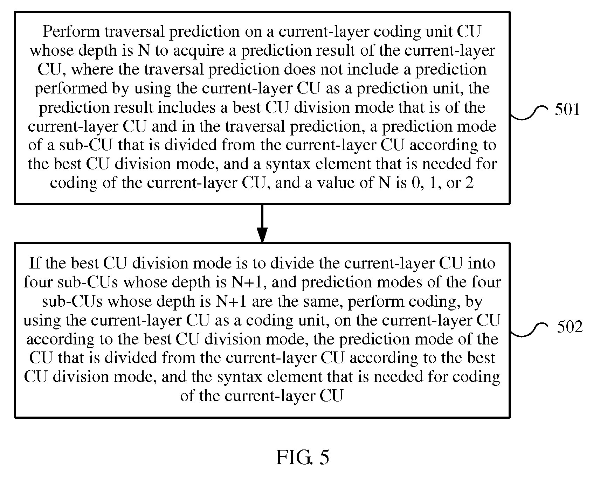

FIG. 5 is a flowchart of a video coding method for INTRA according to an embodiment of the present invention. The method in FIG. 5 is performed by a video coding apparatus.

501. Perform a traversal prediction on a current-layer coding unit CU whose depth is N to acquire a prediction result of the current-layer CU.

The traversal prediction does not include prediction performed by using the current-layer CU as a prediction unit, the prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, and a value of N is 0, 1, or 2.

Optionally, when the value of N is 1, the current-layer CU whose depth is N is a CU64, and a sub-CU whose depth is N+1 is a CU32; when the value of N is 2, the current-layer CU whose depth is N is a CU32, and a sub-CU whose depth is N+1 is a CU16; when the value of N is 3, the current-layer CU whose depth is N is a CU16, and a sub-CU whose depth is N+1 is a CU8.

502. If the best CU division mode is to divide the current-layer CU into four sub-CUs whose depth is N+1, and prediction modes of the four sub-CUs whose depth is N+1 are the same, perform coding, by using the current-layer CU as a coding unit, on the current-layer CU according to the best CU division mode, the prediction mode of the CU that is divided from the current-layer CU according to the best CU division mode, and the syntax element that is needed for coding of the current-layer CU.

In this embodiment of the present invention, during traversal prediction, the traversal prediction is performed on a CU division mode except a current-layer CU to acquire a prediction result. When a best CU division mode is to divide the current-layer CU into four sub-CUs, and prediction modes of the four sub-CUs are the same, coding is performed according to the prediction result by using the current-layer CU as a coding unit, thereby reducing prediction costs, and reducing coding complexity to some extent.

In addition, according to the method in this embodiment of the present invention, hardware power consumption and a chip size of a video coding apparatus may be further reduced.

It should be understood that the best CU division mode indicates a best CU division obtained when the traversal prediction does not include prediction of the current-layer CU.

The following further describes the method in this embodiment of the present invention with reference to a specific embodiment.

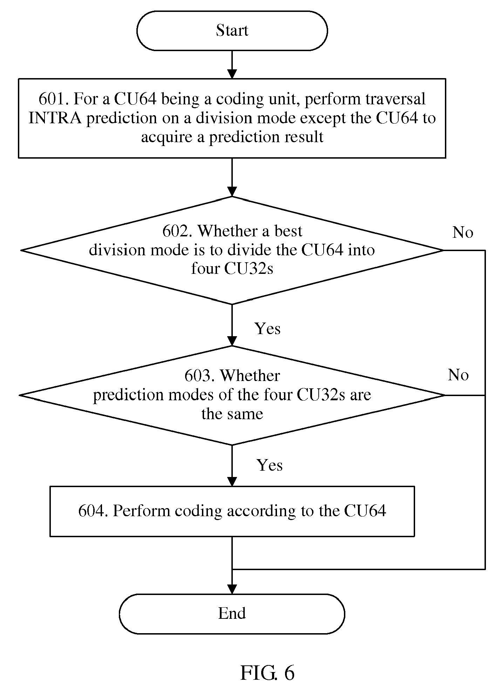

FIG. 6 is a flowchart of a video coding method for INTRA prediction according to an embodiment of the present invention. In this embodiment of the present invention, coding is performed by using a CU64 as a coding unit.

601. For the coding unit being the CU64, perform traversal INTRA prediction on a division mode except the CU64 to acquire a prediction result.

A current-layer CU is the CU64, that is, a size of a CTU.

When the traversal INTRA prediction is performed on the CU64, prediction is not performed on the CU64, that is, the traversal prediction is performed on all CU division modes except the CU64.

The traversal INTRA prediction is performed to obtain the prediction result of the CU64 in a current predictive coding manner (a predictive coding manner that does not include prediction on the CU64). The prediction result may include a best CU division mode that is of the CU64 and in the traversal prediction, a prediction mode of a sub-CU that is divided according to the best CU division mode, a syntax element that is needed for coding of the CU64, and the like.

Reference may be made to the prior art for specific implementation of performing the traversal INTRA prediction to acquire the prediction result. To better understand the method in this embodiment of the present invention, a determining process of the method is briefly described herein. In a specific implementation manner of this embodiment of the present invention, mode determining may be performed by using rate-distortion optimization (Rate Distortion Optimization, RDO) to acquire the prediction result. In this case, a cost function for mode determining of a CU division mode of the current-layer CU may be shown in the following formula:

$$Cost = Distortion + \lambda * Bits ,$$

where *Distortion* represents prediction distortion of the current-layer CU in the CU division mode, and the prediction distortion may be specifically determined according to a luma variance and a chroma variance that are of the current-layer CU in the CU division mode; *Bits* represents a quantity of bytes occupied by predictive coding of the current-layer CU in the CU division mode; $\lambda$ represents a constraint value of determining the CU division mode; *Cost* represents costs of determining the CU division mode. A smaller *Cost* indicates a better CU division mode of the current-layer CU. A CU division mode obtained when *Cost* is the smallest is the best CU division mode of the current-layer CU.

Certainly, the prediction result may be acquired in another manner, which is not limited in this embodiment of the present invention.

In addition, in a scenario in which traversal prediction does not include INTRA CU64 prediction, a performance report of an HEVC coder in a simulation experiment is shown in the following table:

|  | Y | U | V | YUV |
|---|---|---|---|---|
| **Class A** | 0.0% | 0.1% | 0.1% | 0.0% |
| **Class B** | 0.1% | 0.2% | 0.3% | 0.1% |
| **Surveillance** | 0.5% | 2.1% | 3.4% | 0.9% |
| **Motion** | 0.0% | 0.2% | 0.2% | 0.1% |
| **Comprehensive effect** | 0.1% | 0.5% | 0.7% | 0.2% |

Class A and Class B are picture sequences of two sizes defined in a picture coding standard, and resolutions of Class A and Class B are respectively 2560*1600 and 1920*1080. Surveillance represents a surveillance picture sequence, and Motion represents a motion picture sequence. Y, U, and V respectively represent a Y component, a U component, and a V component that are of YUV color space. Percentage values in the table are BD-rates that represent an increase or a decrease of a picture signal to noise ratio PSNR at a same bit rate.

A decoder can support CU64 coding. In terms of coding performance, it may be seen from the foregoing table that in a case in which the INTRA CU64 prediction is not performed, the coder loses only about 0.2% in the coding performance. However, when coding complexity is reduced by 1/4, power consumption and a chip area of the coder are also reduced.

602. Determine whether a best CU division mode is to divide the CU64 into four CU32s.

Whether the current best CU division mode is to divide the CU64 into four CU32s may be determined according to the prediction result.

If the prediction result indicates that the best CU division mode is to divide the CU64 into four CU32s, step 303 is performed.

If the prediction result indicates that the best CU division mode is not to divide the CU64 into four CU32s, performing ends.

603. Determine whether prediction modes of the four CU32s are the same.

When the best CU division mode is to divide the CU64 into four CU32s, whether the prediction modes of the four CU32s of the CU64 are the same may be further determined.

Specifically, whether the prediction modes of the four CU32s of the CU64 are the same may be determined according to luma modes and chroma modes of the four CU32s.

If the four CU32s are the same in both the luma mode and the chroma mode, it is considered that the prediction modes of the four CU32s of the CU64 are the same, and step 304 is performed; or if the four CU32s are not the same in either the luma mode or the chroma mode, it is considered that not all the prediction modes of the four CU32s of the CU64 are the same, and performing ends.

604. Perform coding according to the CU64.

If both the determining conditions in step 602 and step 603 are met, coding may be performed according to the prediction result by using the CU64 as the coding unit.

Specifically, coding may be performed according to the CU division mode, the prediction mode, the syntax element that is needed for coding of the CU64, and the like that are in the prediction result. In specific implementation, according to implementation of code-stream coding in the method, coding may be performed according to a procedure defined in an existing protocol standard, and information such as the CU division mode, the prediction mode, and the syntax element that is needed for coding may be written into a code stream. For a detailed implementation process, refer to the prior art. Details are not described in this embodiment of the present invention herein again.

In the scenario in which the traversal prediction does not include the INTRA CU64 prediction, if the prediction modes of the four CU32s are consistent, the HEVC coder performs coding according to the CU64, which supports coding of the CU64 and improves coding quality for the Surveillance-type sequence. A performance report of a simulation experiment is shown in the following table:

|  | Y | U | V | YUV |
|---|---|---|---|---|
| **Class A** | 0.0% | 0.0% | 0.0% | 0.0% |
| **Class B** | 0.0% | 0.0% | 0.0% | 0.0% |
| **Surveillance** | 0.0% | -0.1% | -0.3% | 0.0% |
| **Motion** | 0.0% | 0.0% | 0.0% | 0.0% |
| **Comprehensive effect** | 0.0% | 0.0% | 0.0% | 0.0% |

In this embodiment of the present invention, when a best CU division mode is to divide a coding unit of a size of a CU64 into four CU32s, and prediction modes of the four CU32s are the same, coding is performed according to a prediction result by using the CU64 as a coding unit, thereby reducing prediction costs, and reducing coding complexity to some extent.

In addition, according to the method in this embodiment of the present invention, power consumption and an area size of a video coding apparatus may be further reduced.

In addition, it should be understood that the foregoing coding method for a CU64 may be further applied to a coding unit of a size of a CU32 or a CU16. Correspondingly, a next-layer sub-CU of the CU32 or the CU16 is a CU16 or a CU8. For specific implementation, refer to the method in FIG. 6; details are not described in this embodiment of the present invention herein again.

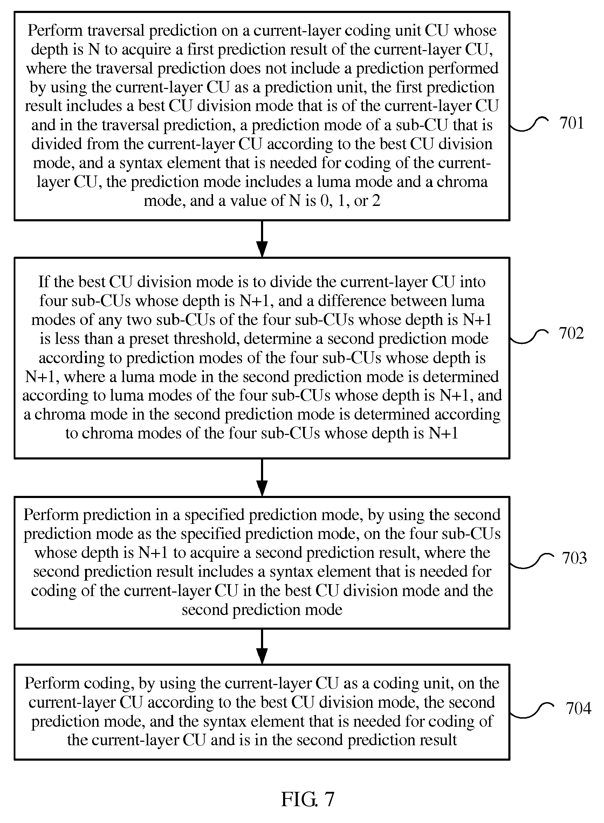

FIG. 7 is a flowchart of another video coding method for INTRA according to an embodiment of the present invention. The method in FIG. 7 is performed by a video coding apparatus.

701. Perform traversal prediction on a current-layer coding unit CU whose depth is N to acquire a first prediction result of the current-layer CU.

The traversal prediction does not include prediction performed by using the current-layer CU as a prediction unit, the first prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, the prediction mode includes a luma mode and a chroma mode, and a value of N is 0, 1, or 2.

Optionally, when the value of N is 1, the current-layer CU whose depth is N is a CU64, and a sub-CU whose depth is N+1 is a CU32; when the value of N is 2, the current-layer CU whose depth is N is a CU32, and a sub-CU whose depth is N+1 is a CU16; when the value of N is 3, the current-layer CU whose depth is N is a CU16, and a sub-CU whose depth is N+1 is a CU8.

702. If the best CU division mode is to divide the current-layer CU into four sub-CUs whose depth is N+1, and a difference between luma modes of any two sub-CUs of the four sub-CUs whose depth is N+1 is less than a preset threshold, determine a second prediction mode according to prediction modes of the four sub-CUs whose depth is N+1.

A luma mode in the second prediction mode is determined according to luma modes of the four sub-CUs whose depth is N+1, and a chroma mode in the second prediction mode is determined according to chroma modes of the four sub-CUs whose depth is N+1.

It should be understood that when the difference between the luma modes of the four sub-CUs of the current-layer CU is less than the preset threshold, a same second prediction mode is selected for the four sub-CUs of the current-layer CU to perform predictive coding again, so that coding complexity can be reduced.

The luma mode in the second prediction mode may be determined in multiple manners according to the luma modes of the four sub-CUs whose depth is N+1.

In a manner, a maximum value of the luma modes of the four sub-CUs whose depth is N+1 may be selected as the luma mode in the second prediction mode.

In another manner, a minimum value of the luma modes of the four sub-CUs whose depth is N+1 may be selected as the luma mode in the second prediction mode.

In still another manner, an intermediate value of the luma modes of the four sub-CUs whose depth is N+1 may be selected as the luma mode in the second prediction mode.

In still another manner, a luma average value of the luma modes of the four sub-CUs whose depth is N+1 may be selected as the luma mode in the second prediction mode. The luma average value may be specifically one of an arithmetic average value, a geometric average value, a harmonic average value, a weighted average value, or a square average value that is of the luma modes of the four sub-CUs whose depth is N+1 and that are of the current-layer CU. If the weighted average value is used, weighing coefficients of the four sub-CUs whose depth is N+1 and that are of the current-layer CU need to be further determined. In addition, because the luma average value is not necessarily an integer, it may be considered to select, as the luma mode in the second prediction mode, a maximum integer that is not greater than the luma average value or a minimum integer that is not less than the luma average value.

When the chroma mode in the second prediction mode is being selected, one chroma mode may be selected as the chroma mode in the second prediction mode from the chroma modes in the prediction modes of the four sub-CUs of the current-layer CU.

703. Perform prediction, by using the second prediction mode as a specified prediction mode, on the four sub-CUs whose depth is N+1 to acquire a second prediction result.

The second prediction result includes a syntax element that is needed for coding of the current-layer CU in the best CU division mode and the second prediction mode.

Prediction in the specified mode is performed, according to the second prediction mode, on the four sub-CUs whose depth is N+1. Therefore, during coding, coding is performed according to a prediction result obtained after a re-prediction, and coding complexity can be reduced.

704. Perform coding, by using the current-layer CU as a coding unit, on the current-layer CU according to the best CU division mode, the second prediction mode, and a syntax element that is needed for coding of the current-layer CU and is in the second prediction result.

In this embodiment of the present invention, during predictive coding, traversal prediction is performed on a CU division mode except a current-layer CU. When a best CU division mode is to divide the current-layer CU into four sub-CUs, and luma modes of the four sub-CUs are similar, re-prediction in a specified prediction mode is performed according to a prediction mode that is the same as or similar to prediction modes of the four sub-CUs, and coding is performed according to a result of the re-prediction by using the current-layer CU as a coding unit, thereby reducing prediction costs, and reducing coding complexity to some extent.

In addition, according to the method in this embodiment of the present invention, power consumption and a size of a chip area of a video coding apparatus may be further reduced.

It should be understood that the current best CU division of the current-layer CU indicates a best CU division obtained when the traversal prediction does not include prediction of the current-layer CU.

The following further describes the method in this embodiment of the present invention with reference to a specific embodiment.

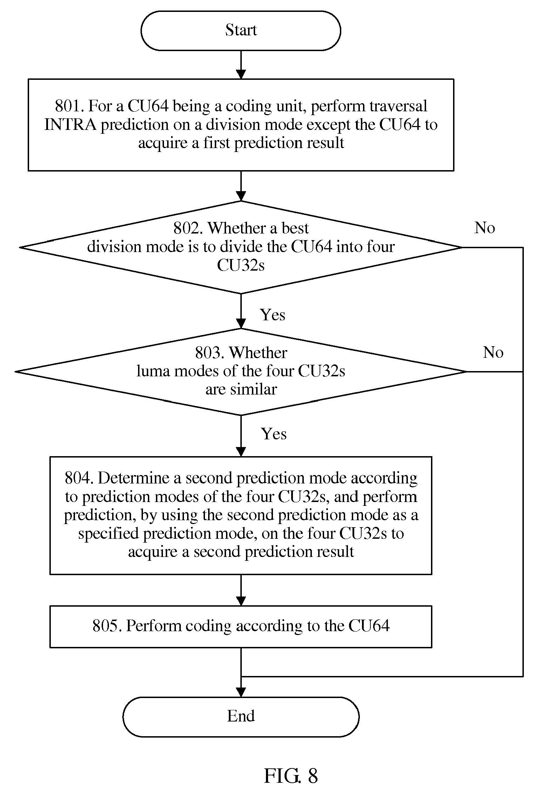

FIG. 8 is a flowchart of another video coding method for INTRA prediction according to an embodiment of the present invention. In this embodiment of the present invention, coding is performed by using a CU64 as a coding unit.

801. For the CU64 being the coding unit, perform traversal INTRA prediction on a division mode except the CU64 to acquire a first prediction result.

The method in step 801 is similar to that in step 601 in FIG. 6. In this case, the first prediction result may include a best CU division mode that is of the CU64 and in the traversal prediction, a prediction mode of a sub-CU obtained by means of division according to the best CU division mode, a syntax element that is needed for coding of the CU64, and the like.

802. Determine whether a best CU division mode is to divide the CU64 into four CU32s.

The determining method in step 802 is similar to that in step 602 in FIG. 6. For specific implementation, refer to step 601. Details are not described in this embodiment of the present invention herein again.

If the best CU division mode is to divide the CU64 into four CU32s, step 803 is performed; or if the best CU division mode is not to divide the CU64 into four CU32s, performing ends.

803. Determine whether luma modes of the four CU32s are similar.

When the best CU division mode is to divide the CU64 into four CU32s, whether prediction modes of the four CU32s are similar may be further determined. Because a luma mode is a most important determining factor of a prediction mode, when luma modes of CUs are similar, it may be considered that prediction modes of the CUs are similar. Whether the luma modes are similar may be determined according to a difference between the luma modes of the CUs.

Specifically, if a difference between luma modes of any two CU32s of the four CU32s is less than a preset threshold, it indicates that the luma modes of the four CU32s are similar, and step 804 is performed; or if a difference between luma modes of any two CU32s of the four CU32s is not less than a preset threshold, performing ends.

It should be understood that the preset threshold may be preset by a video coding apparatus. The preset threshold may be a fixed value, or may be configurable.

In a specific embodiment, if the preset threshold is set to 3, and the luma modes of the four CU32s are respectively 24, 24, 25, and 26. In this case, a value of a difference between any two CU32s of the four CU32s is 0, 1, or 2, which meets a determining condition. It indicates that the luma modes of the four CU32s are relatively similar, and step 804 is performed.

In another specific embodiment, if the preset threshold is set to 3, and the luma modes of the four CU32s are respectively 24, 24, 25, and 27. In this case, a value of a difference between two CU32s is 3, which does not meet a determining condition. It indicates that the luma modes of the four CU32s are not similar, and step 804 is performed.

804. Determine a second prediction mode according to prediction modes of the four CU32s, and perform prediction, by using the second prediction mode as a specified prediction mode, on the four CU32s to acquire a second prediction result.

If the luma modes of the four CU32s are similar, it may be considered that the prediction modes of the four CU32s are similar. In this case, one prediction mode may be selected as a prediction mode of the four CU32s to perform predictive coding again, where the prediction mode is referred to as the second prediction mode.

In specific implementation, a luma mode in the second prediction mode may be determined in multiple manners.

In a first manner, a maximum value of the luma modes in the prediction modes of the four CU32s may be selected as the luma mode in the second prediction mode. For example, the luma modes in the prediction modes of the four CU32s are respectively 24, 24, 25, and 27, and in this case, the luma mode in the second prediction mode is 27.

In a second manner, a minimum value of the luma modes in the prediction modes of the four CU32s may be selected as the luma mode in the second prediction mode. For example, the luma modes in the prediction modes of the four CU32s are respectively 24, 24, 25, and 27, and in this case, the luma mode in the second prediction mode is 24.

In a third manner, an intermediate value of the luma modes in the prediction modes of the four CU32s may be selected as the luma mode in the second prediction mode. For example, the luma modes in the prediction modes of the four CU32s are respectively 24, 24, 25, and 27, and in this case, the luma mode in the second prediction mode is 25.

In a fourth manner, an arithmetic average value of the luma modes in the prediction modes of the four CU32s may be selected as the luma mode in the second prediction mode. For example, the luma modes in the prediction modes of the four CU32s are respectively 24, 24, 25, and 27, and in this case, the luma mode in the second prediction mode is 25. Certainly, the arithmetic average value may be changed to a geometric average value, a harmonic average value, a weighted average value, or a square average value, and these average values may be all referred to as a luma average value. It should be noted that when the luma mode in the second prediction mode is determined according to the luma average value, an obtained value may be not an integer. In this case, it may be considered to select, as the luma mode in the second prediction mode, a maximum integer that is not greater than the luma average value or a minimum integer that is not less than the luma average value.

Certainly, the luma mode in the second prediction mode may be further determined in another manner, which is not limited in this embodiment of the present invention.

In addition, when the second prediction mode is being determined, a chroma mode in the second prediction mode needs to be further determined. Specifically, one chroma mode may be selected as the chroma mode in the second prediction mode from chroma modes in the prediction modes of the four CU32s. In a manner, one chroma mode may be randomly selected as the chroma mode in the second prediction mode from the chroma modes in the prediction modes of the four CU32s. In another manner, a chroma mode that is corresponding to a prediction mode, from the prediction modes of the four CU32s, in which a luma mode is equal to the luma mode in the second prediction mode may be selected as the chroma mode in the second prediction mode. Certainly, there may be another solution for selecting the chroma mode, which is not limited in this embodiment of the present invention.

After the second prediction mode is determined, the prediction is performed on the four CU32s by using the second prediction mode as the specified prediction mode, so as to acquire the second prediction result. The second prediction result may include a syntax element that is needed for coding of the CU64 in the best CU division mode and the second prediction mode.

It should be understood that the re-prediction in the specified prediction mode is performed on the four CU32s according to the second prediction mode, and coding is performed on the CU64 according to the prediction result of the re-prediction, so that picture content can be flexibly matched, and a relatively good coding effect can be obtained.

805. Perform coding according to the CU64.

During coding, coding is performed, by using the CU64 as the coding unit, according to the best CU division mode, the second prediction mode, and the syntax element that is needed for coding of the CU64 and in the second prediction result. In specific implementation, according to implementation of code-stream coding in the method, coding may be performed according to a procedure defined in an existing protocol standard, and information such as the CU division mode, the prediction mode, and the syntax element that is needed for coding may be written into a code stream. For a detailed implementation process, refer to the prior art; details are not described in this embodiment of the present invention herein again.

In this embodiment of the present invention, when a best CU division mode is to divide a coding unit of a size of a CU64 into four CU32s, and prediction modes of the four CU32s are similar, re-prediction is performed on the four CU32s according to a prediction mode that is similar to or the same as the prediction modes of the four CU32s, and coding is performed according to a prediction result of the re-prediction by using the CU64 as a coding unit, thereby reducing video coding complexity to some extent.

In addition, according to the method in this embodiment of the present invention, power consumption and a size of a chip area of a video coding apparatus may be further reduced.

In addition, it should be understood that the foregoing coding method for a CU64 may be further applied to a coding unit of a size of a CU32 or a CU16. Correspondingly, a next-layer sub-CU of the CU32 or the CU16 is a CU16 or a CU8. For specific implementation, refer to the method in FIG. 8. Details are not described in this embodiment of the present invention herein again.

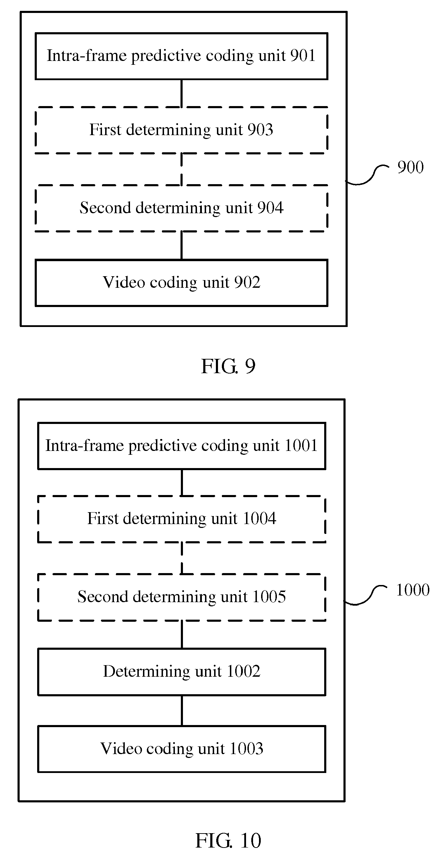

FIG. 9 is a schematic structural diagram of a video coding apparatus 900 according to an embodiment of the present invention. The video coding apparatus 900 may include an intra-frame predictive coding unit 901 and a video coding unit 902.

The intra-frame predictive coding unit 901 is configured to perform traversal prediction on a current-layer coding unit CU whose depth is N to acquire a prediction result of the current-layer CU.

The traversal prediction does not include prediction performed by using the current-layer CU as a prediction unit, the prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, and a value of N is 0, 1, or 2.

The video coding unit 902 is configured to: if the best CU division mode is to divide the current-layer CU into four sub-CUs whose depth is N+1, and prediction modes of the four sub-CUs whose depth is N+1 are the same, perform coding, by using the current-layer CU as a coding unit, on the current-layer CU according to the best CU division mode, the prediction mode of the CU that is divided from the current-layer CU according to the best CU division mode, and the syntax element that is needed for coding of the current-layer CU.

In this embodiment of the present invention, during traversal prediction, the video coding apparatus 900 performs the traversal prediction on a CU division mode except a current-layer CU to acquire a prediction result; and when a best CU division mode is to divide the current-layer CU into four sub-CUs, and prediction modes of the four sub-CUs are the same, performs coding according to the prediction result by using the current-layer CU as a coding unit, thereby reducing prediction costs, and reducing coding complexity to some extent.

In addition, power consumption and a size of a chip area of the video coding apparatus 900 in this embodiment of the present invention may be further reduced.

It should be understood that the current best CU division of the current-layer CU indicates a best CU division obtained when the traversal prediction does not include prediction of the current-layer CU.

It should be understood that in this embodiment of the present invention, the video coding apparatus 900 may be specifically a video coder, where specific implementation of the video coding apparatus may be implemented by hardware, for example, a physical chip, or implemented by software.

Specifically, when the value of N is 0, the current-layer CU whose depth is N is a CU64, and the sub-CU whose depth is N+1 is a CU32; or when the value of N is 1, the current-layer CU whose depth is N is a CU32, and the sub-CU whose depth is N+1 is a CU16; or when the value of N is 2, the current-layer CU whose depth is N is a CU16, and the sub-CU whose depth is N+1 is a CU8.

Optionally, the video coding apparatus 900 may further include a first determining unit 903 and a second determining unit 904. The first determining unit 903 is configured to determine whether the best CU division mode is to divide the current-layer CU into four sub-CUs whose depth is N+1. The second determining unit 904 is configured to determine whether prediction modes of the four sub-CUs whose depth is N+1 are the same.

The video coding apparatus 900 may further perform the method in FIG. 5 and implement functions of the video coding apparatus in embodiments shown in FIG. 5 and FIG. 6 and embodiments derived from the embodiments. For specific implementation, refer to the embodiments shown in FIG. 5 and FIG. 6 and the embodiments derived from the embodiments. Details are not described in this embodiment of the present invention herein again.

FIG. 10 is a schematic structural diagram of a video coding apparatus 1000 according to an embodiment of the present invention. The video coding apparatus 1000 may include an intra-frame predictive coding unit 1001, a determining unit 1002, and a video coding unit 1003.

The intra-frame predictive coding unit 1001 is configured to perform traversal prediction on a current-layer coding unit CU whose depth is N to acquire a first prediction result of the current-layer CU.

The traversal prediction does not include prediction performed by using the current-layer CU as a prediction unit, the first prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, the prediction mode includes a luma mode and a chroma mode, and a value of N is 0, 1, or 2.

The determining unit 1002 is configured to: if the best CU division mode is to divide the current-layer CU into four sub-CUs whose depth is N+1, and a difference between luma modes of any two sub-CUs of the four sub-CUs whose depth is N+1 is less than a preset threshold, determine a second prediction mode according to prediction modes of the four sub-CUs whose depth is N+1.

A luma mode in the second prediction mode is determined according to luma modes of the four sub-CUs whose depth is N+1, and a chroma mode in the second prediction mode is determined according to chroma modes of the four sub-CUs whose depth is N+1.

The intra-frame predictive coding unit 1001 is further configured to perform prediction, by using the second prediction mode as a specified prediction mode, on the four sub-CUs whose depth is N+1 to acquire a second prediction result.

The second prediction result includes a syntax element that is needed for coding of the current-layer CU in the best CU division mode and the second prediction mode.

The video coding unit 1003 is configured to perform coding, by using the current-layer CU as a coding unit, on the current-layer CU according to the best CU division mode, the second prediction mode, and the syntax element that is needed for coding of the current-layer CU and is in the second prediction result.

In this embodiment of the present invention, during predictive coding, the video coding apparatus 1000 performs traversal prediction on a CU division mode except a current-layer CU; and when a best CU division mode is to divide the current-layer CU into four sub-CUs, and luma modes of the four sub-CUs are similar, performs re-prediction in a specified prediction mode according to a prediction mode that is the same as or similar to prediction modes of the four sub-CUs, and performs coding according to a result of the re-prediction by using the current-layer CU as a coding unit, thereby reducing prediction costs, and reducing coding complexity to some extent.

In addition, power consumption and a size of a chip area of the video coding apparatus 1000 in this embodiment of the present invention may be further reduced.

It should be understood that the current best CU division of the current-layer CU indicates a best CU division obtained when the traversal prediction does not include prediction of the current-layer CU.

Specifically, when the value of N is 0, the current-layer CU whose depth is N is a CU64, and the sub-CU whose depth is N+1 is a CU32; or when the value of N is 1, the current-layer CU whose depth is N is a CU32, and the sub-CU whose depth is N+1 is a CU16; or when the value of N is 2, the current-layer CU whose depth is N is a CU16, and the sub-CU whose depth is N+1 is a CU8.

Optionally, the video coding apparatus 1000 may further include a first determining unit 1004 and a second determining unit 1005. The first determining unit 1004 is configured to determine whether the best CU division mode is to divide the current-layer CU into four sub-CUs whose depth is N+1. The second determining unit 1005 is configured to determine whether a difference between luma modes of any two sub-CUs of the four sub-CUs whose depth is N+1 is less than a preset threshold.

Specifically, the determining unit 1002 may be configured to determine one of the following values as the luma mode in the second prediction mode:

a maximum value of the luma modes of the four sub-CUs whose depth is N+1; or

a minimum value of the luma modes of the four sub-CUs whose depth is N+1; or

an intermediate value of the luma modes of the four sub-CUs whose depth is N+1; or

a minimum integer that is not less than an average value of the luma modes; or

a maximum integer that is not greater than an average value of the luma modes, where

the luma average value is one of an arithmetic average value, a geometric average value, a harmonic average value, a weighted average value, or a square average value that is of the luma modes of the four sub-CUs whose depth is N+1.

Specifically, the determining unit 1002 may be further configured to determine, as the chroma mode in the second prediction mode, one of the luma modes of the four sub-CUs whose depth is N+1 and that are of the current-layer CU.

The video coding apparatus 1000 may further perform the method in FIG. 7 and implement functions of the video coding apparatus in embodiments shown in FIG. 7 and FIG. 8 and embodiments derived from the embodiments. For specific implementation, refer to the embodiments shown in FIG. 7 and FIG. 8 and the embodiments derived from the embodiments. Details are not described in this embodiment of the present invention herein again.

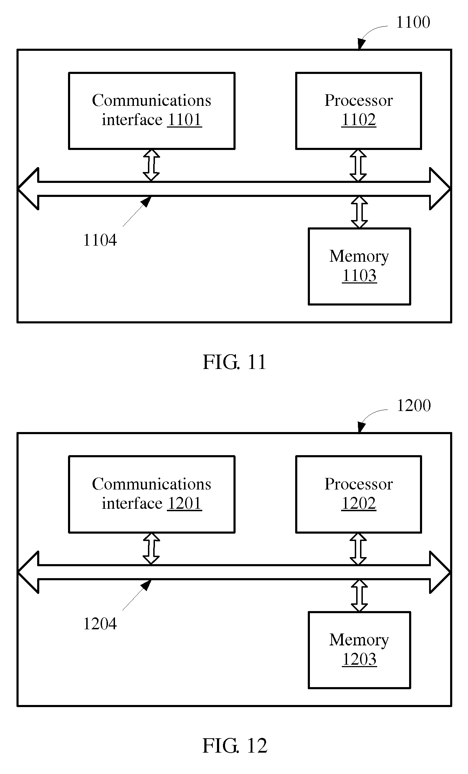

FIG. 11 is a schematic structural diagram of a video coder 1100 according to an embodiment of the present invention. The video coder 1100 may include a communications interface 1101, a processor 1102, and a memory 1103.

The communications interface 1101, the processor 1102, and the memory 1103 are connected to each other by using a bus system 1103. A bus 1104 may be an ISA bus, a PCI bus, an EISA bus, or the like. The bus may be classified into an address bus, a data bus, a control bus, and the like. For ease of denotation, the bus is denoted by using only one double-headed arrow in FIG. 8. However, it does not indicate that there is only one bus or only one type of buses.

The memory 1103 is configured to store a program. Specifically, the program may include program code, where the program code includes a computer operation instruction. The memory 1103 may include a read-only memory and a random access memory, and provides an instruction and data to the processor 1102. The memory 1103 may include a high-speed RAM memory, and may further include a non-volatile memory (non-volatile memory), for example, at least one disk memory.

The processor 1102 is configured to invoke the program stored in the memory 1103 and is specifically configured to perform the following operations:

perform traversal prediction on a current-layer coding unit CU whose depth is N to acquire a prediction result of the current-layer CU, where the traversal prediction does not include prediction performed by using the current-layer CU as a prediction unit, the prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, and a value of N is 0, 1, or 2; and

if the best CU division mode is to divide the current-layer CU into four sub-CUs whose depth is N+1, and prediction modes of the four sub-CUs whose depth is N+1 are the same, perform coding, by using the current-layer CU as a coding unit, on the current-layer CU according to the best CU division mode, the prediction mode of the CU that is divided from the current-layer CU according to the best CU division mode, and the syntax element that is needed for coding of the current-layer CU.

The foregoing method that is disclosed in any embodiment of FIG. 5 or FIG. 6 in the present invention and is performed by the video coding apparatus may be applied to the processor 1102 or implemented by the processor 1102. The processor 1102 may be an integrated circuit chip and has a signal processing capability. In an implementation process, the steps in the foregoing methods may be completed by using an integrated logic circuit of hardware in the processor 1102 or an instruction in a form of software. The foregoing processor 1102 may be a general-purpose processor, including a central processing unit (Central Processing Unit, CPU for short), a network processor (Network Processor, NP for short), and the like; or may be a digital signal processor (DSP), an application-specific integrated circuit (ASIC), a field programmable gate array (FPGA) or another programmable logic component, a discrete gate or a transistor logic component, or a discrete hardware component, which may implement or perform the methods, the steps, and logical block diagrams that are disclosed in the embodiments of the present invention. The general-purpose processor may be a microprocessor, or the processor may further be any conventional processor, or the like. The steps of the methods disclosed with reference to the embodiments of the present invention may be directly performed and completed by a hardware decoding processor, or performed and completed by a combination of hardware and software modules in a decoding processor. The software module may be located in a mature storage medium in the field, such as a random access memory, a flash memory, a read-only memory, a programmable read-only memory, an electrically erasable programmable memory, or a register. The storage medium is located in the memory 1103. The processor 1102 reads information from the memory 1103 and completes the steps in the foregoing methods in combination with the hardware of the processor 1102.

In this embodiment of the present invention, during traversal prediction, the video coding apparatus 1100 performs the traversal prediction on a CU division mode except a current-layer CU to acquire a prediction result; and when a best CU division mode is to divide the current-layer CU into four sub-CUs, and prediction modes of the four sub-CUs are the same, performs coding according to the prediction result by using the current-layer CU as a coding unit, thereby reducing prediction costs, and reducing coding complexity to some extent.

In addition, power consumption and a size of a chip area of the video coding apparatus 1100 in this embodiment of the present invention may be further reduced.

Specifically, when the value of N is 0, the current-layer CU whose depth is N is a CU64, and the sub-CU whose depth is N+1 is a CU32; or when the value of N is 1, the current-layer CU whose depth is N is a CU32, and the sub-CU whose depth is N+1 is a CU16; or when the value of N is 2, the current-layer CU whose depth is N is a CU16, and the sub-CU whose depth is N+1 is a CU8.

Optionally, the processor 1102 is further configured to determine whether the best CU division mode is to divide the current-layer CU into four sub-CUs whose depth is N+1, and configured to determine whether prediction modes of the four sub-CUs whose depth is N+1 are the same.

In addition, the video coder 1100 may further perform the method in FIG. 5 and implement functions of the video coding apparatus in embodiments shown in FIG. 5 and FIG. 6 and embodiments derived from the embodiments. For specific implementation, refer to the embodiments shown in FIG. 5 and FIG. 6 and the embodiments derived from the embodiments. Details are not described in this embodiment of the present invention herein again.

FIG. 12 is a schematic structural diagram of a video coder 1200 according to an embodiment of the present invention. The video coder 1200 may include a communications interface 1201, a processor 1202, and a memory 1203.

The communications interface 1201, the processor 1202, and the memory 1203 are connected to each other by using a bus system 1203. A bus 1204 may be an ISA bus, a PCI bus, an EISA bus, or the like. The bus may be classified into an address bus, a data bus, a control bus, and the like. For ease of denotation, the bus is denoted by using only one double-headed arrow in FIG. 9; however, it does not indicate that there is only one bus or only one type of buses.

The memory 1203 is configured to store a program. Specifically, the program may include program code, where the program code includes a computer operation instruction. The memory 1203 may include a read-only memory and a random access memory, and provides an instruction and data to the processor 1202. The memory 1203 may include a high-speed RAM memory, and may further include a non-volatile memory (non-volatile memory), for example, at least one disk memory.

The processor 1202 is configured to invoke the program stored in the memory 1203 and is specifically configured to perform the following operations:

perform traversal prediction on a current-layer coding unit CU whose depth is N to acquire a first prediction result of the current-layer CU, where the traversal prediction does not include prediction performed by using the current-layer CU as a prediction unit, the first prediction result includes a best CU division mode of the current-layer CU, a prediction mode of a CU that is divided from the current-layer CU according to the best CU division mode, and a syntax element that is needed for coding of the current-layer CU, the prediction mode includes a luma mode and a chroma mode, and a value of N is 0, 1, or 2;

if the best CU division mode is to divide the current-layer CU into four sub-CUs whose depth is N+1, and a difference between luma modes of any two sub-CUs of the four sub-CUs whose depth is N+1 is less than a preset threshold, determine a second prediction mode according to prediction modes of the four sub-CUs whose depth is N+1, where a luma mode in the second prediction mode is determined according to luma modes of the four sub-CUs whose depth is N+1, and a chroma mode in the second prediction mode is determined according to chroma modes of the four sub-CUs whose depth is N+1;

perform prediction, by using the second prediction mode as a specified prediction mode, on the four sub-CUs whose depth is N+1 to acquire a second prediction result, where the second prediction result includes a syntax element that is needed for coding of the current-layer CU in the best CU division mode and the second prediction mode; and

perform coding, by using the current-layer CU as a coding unit, on the current-layer CU according to the best CU division mode, the second prediction mode, and the syntax element that is needed for coding of the current-layer CU and is in the second prediction result.

The foregoing method that is disclosed in any embodiment of FIG. 7 or FIG. 8 in the present invention and is performed by the video coding apparatus may be applied to the processor 1202 or implemented by the processor 1202. The processor 1202 may be an integrated circuit chip and has a signal processing capability. In an implementation process, the steps in the foregoing methods may be completed by using an integrated logic circuit of hardware in the processor 1202 or an instruction in a form of software. The foregoing processor 1202 may be a general-purpose processor, including a central processing unit (Central Processing Unit, CPU for short), a network processor (Network Processor, NP for short), and the like; or may be a digital signal processor (DSP), an application-specific integrated circuit (ASIC), a field programmable gate array (FPGA) or another programmable logic component, a discrete gate or a transistor logic component, or a discrete hardware component, which may implement or perform the methods, the steps, and logical block diagrams that are disclosed in the embodiments of the present invention. The general-purpose processor may be a microprocessor, or the processor may further be any conventional processor, or the like. The steps of the methods disclosed with reference to the embodiments of the present invention may be directly performed and completed by a hardware decoding processor, or performed and completed by a combination of hardware and software modules in a decoding processor. The software module may be located in a mature storage medium in the field, such as a random access memory, a flash memory, a read-only memory, a programmable read-only memory, an electrically erasable programmable memory, or a register. The storage medium is located in the memory 1203. The processor 1202 reads information from the memory 1203 and completes the steps in the foregoing methods in combination with the hardware of the processor 1202.

In this embodiment of the present invention, during predictive coding, the video coding apparatus 1200 performs traversal prediction on a CU division mode except a current-layer CU; and when a best CU division mode is to divide the current-layer CU into four sub-CUs, and luma modes of the four sub-CUs are similar, performs re-prediction in a specified prediction mode according to a prediction mode that is the same as or similar to prediction modes of the four sub-CUs, and performs coding according to a result of the re-prediction by using the current-layer CU as a coding unit, thereby reducing prediction costs, and reducing coding complexity to some extent.

In addition, power consumption and a size of a chip area of the video coding apparatus 1200 in this embodiment of the present invention may be further reduced.

Specifically, when the value of N is 0, the current-layer CU whose depth is N is a CU64, and the sub-CU whose depth is N+1 is a CU32; or when the value of N is 1, the current-layer CU whose depth is N is a CU32, and the sub-CU whose depth is N+1 is a CU16; or when the value of N is 2, the current-layer CU whose depth is N is a CU16, and the sub-CU whose depth is N+1 is a CU8.

Optionally, the processor 1202 is further configured to determine whether the best CU division mode is to divide the current-layer CU into four sub-CUs whose depth is N+1, and configured to determine whether a difference between luma modes of any two sub-CUs of the four sub-CUs whose depth is N+1 is less than a preset threshold.

Specifically, in a process of determining the second prediction mode according to the prediction modes of the four sub-CUs whose depth is N+1, the processor 1202 may be configured to determine one of the following values as the luma mode in the second prediction mode: a maximum value of the luma modes of the four sub-CUs whose depth is N+1; or a minimum value of the luma modes of the four sub-CUs whose depth is N+1; or an intermediate value of the luma modes of the four sub-CUs whose depth is N+1; or a minimum integer that is not less than an average value of the luma modes; or a maximum integer that is not greater than an average value of the luma modes, where

the luma average value is one of an arithmetic average value, a geometric average value, a harmonic average value, a weighted average value, or a square average value that is of the luma modes of the four sub-CUs whose depth is N+1.

Specifically, in the process of determining the second prediction mode according to the prediction modes of the four sub-CUs whose depth is N+1, the processor 1202 may be further configured to determine, as the chroma mode in the second prediction mode, one of the luma modes of the four sub-CUs whose depth is N+1 and that are of the current-layer CU.

In addition, the video coder 1200 may further perform the method in FIG. 7 and implement functions of the video coding apparatus in embodiments shown in FIG. 7 and FIG. 8 and embodiments derived from the embodiments. For specific implementation, refer to the embodiments shown in FIG. 7 and FIG. 8 and the embodiments derived from the embodiments. Details are not described in this embodiment of the present invention herein again.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A video coding method for intra-frame predictive coding, comprising:

   performing a traversal prediction on a current-layer coding unit CU whose depth is N to acquire a prediction result of the current-layer CU, wherein the traversal prediction does not comprise prediction performed by using the current-layer CU as a prediction unit, the prediction result comprises a best CU division mode that is of the current-layer CU and in the traversal prediction, a prediction mode of a sub-CU that is divided from the current-layer CU according to the best CU division mode, and a syntax element that is needed for coding of the current-layer CU, and a value of N is 0, 1, or 2; and

if the best CU division mode is to divide the current-layer CU into four sub-CUs whose depth is N+1, and prediction modes of the four sub-CUs whose depth is N+1 are the same, performing coding, by using the current-layer CU as a coding unit, on the current-layer CU according to the best CU division mode, the prediction mode of the CU that is divided from the current-layer CU according to the best CU division mode, and the syntax element that is needed for coding of the current-layer CU.

2. The method according to claim 1, wherein
when the value of N is 0, the current-layer CU whose depth is N is a CU64, and the sub-CU whose depth is N+1 is a CU32; or
when the value of N is 1, the current-layer CU whose depth is N is a CU32, and the sub-CU whose depth is N+1 is a CU16; or
when the value of N is 2, the current-layer CU whose depth is N is a CU16, and the sub-CU whose depth is N+1 is a CU8.

3. A video coding method for intra-frame predictive coding, comprising:

performing a traversal prediction on a current-layer coding unit CU whose depth is N to acquire a first prediction result of the current-layer CU, wherein the traversal prediction does not comprise prediction performed by using the current-layer CU as a prediction unit, the first prediction result comprises a best CU division mode that is of the current-layer CU and in the traversal prediction, a prediction mode of a sub-CU that is divided from the current-layer CU according to the best CU division mode, and a syntax element that is needed for coding of the current-layer CU, the prediction mode comprises a luma mode and a chroma mode, and a value of N is 0, 1, or 2;

if the best CU division mode is to divide the current-layer CU into four sub-CUs whose depth is N+1, and a difference between luma modes of any two sub-CUs of the four sub-CUs whose depth is N+1 is less than a preset threshold, determining a second prediction mode according to prediction modes of the four sub-CUs whose depth is N+1, wherein a luma mode in the second prediction mode is determined according to luma modes of the four sub-CUs whose depth is N+1, and a chroma mode in the second prediction mode is determined according to chroma modes of the four sub-CUs whose depth is N+1;

performing prediction in a specified prediction mode, by using the second prediction mode as the specified prediction mode, on the four sub-CUs whose depth is N+1 to acquire a second prediction result, wherein the second prediction result comprises a syntax element that is needed for coding of the current-layer CU in the best CU division mode and the second prediction mode; and

performing coding, by using the current-layer CU as a coding unit, on the current-layer CU according to the best CU division mode, the second prediction mode, and the syntax element that is needed for coding of the current-layer CU and is in the second prediction result.

4. The method according to claim 3, wherein
when the value of N is 0, the current-layer CU whose depth is N is a CU64, and the sub-CU whose depth is N+1 is a CU32; or
when the value of N is 1, the current-layer CU whose depth is N is a CU32, and the sub-CU whose depth is N+1 is a CU16; or
when the value of N is 2, the current-layer CU whose depth is N is a CU16, and the sub-CU whose depth is N+1 is a CU8.

5. The method according to claim 3 or 4, wherein that a luma mode in the second prediction mode is determined according to luma modes of the four sub-CUs whose depth is N+1 is specifically implemented as follows:

the luma mode in the second prediction mode is a maximum value of the luma modes in the prediction modes of the four sub-CUs whose depth is N+1; or
the luma mode in the second prediction mode is a minimum value of the luma modes in the prediction modes of the four sub-CUs whose depth is N+1; or
the luma mode in the second prediction mode is an intermediate value of the luma modes in the prediction modes of the four sub-CUs whose depth is N+1; or
the luma mode in the second prediction mode is a minimum integer that is not less than an average value of the luma modes; or
the luma mode in the second prediction mode is a maximum integer that is not greater than an average value of the luma modes, wherein

the luma average value is one of an arithmetic average value, a geometric average value, a harmonic average value, a weighted average value, or a square average value that is of the luma modes of the four sub-CUs whose depth is N+1.

6. The method according to any one of claims 3 to 5, wherein that a chroma mode in the second prediction mode is determined according to chroma modes of the four sub-CUs whose depth is N+1 is specifically implemented as follows: the chroma mode in the second prediction mode is one of the luma modes of the four sub-CUs whose depth is N+1 and that are of the current-layer CU.

7. A video coding apparatus, comprising:

an intra-frame predictive coding unit, configured to perform a traversal prediction on a current-layer coding unit CU whose depth is N to acquire a prediction result of the current-layer CU, wherein the traversal prediction does not comprise prediction performed by using the current-layer CU as a prediction unit, the prediction result comprises a best CU division mode that is of the current-layer CU and in the traversal prediction, a prediction mode of a sub-CU that is divided from the current-layer CU according to the best CU division mode, and a syntax element that is needed for coding of the current-layer CU, and a value of N is 0, 1, or 2; and

a video coding unit, configured to: if the best CU division mode is to divide the current-layer CU into four sub-CUs whose depth is N+1, and prediction modes of the four sub-CUs whose depth is N+1 are the same, perform coding, by using the current-layer CU as a coding unit, on the current-layer CU according to the best CU division mode, the prediction mode of the CU that is divided from the current-layer CU according to the best CU division mode, and the syntax element that is needed for coding of the current-layer CU.

8. The video coding apparatus according to claim 7, wherein the video coding apparatus further comprises:

a first determining unit, configured to determine whether the best CU division mode is to divide the current-layer CU into the four sub-CUs whose depth is N+1; and

a second determining unit, configured to determine whether the prediction modes of the four sub-CUs whose depth is N+1 are the same.

9. The video coding apparatus according to claim 7 or 8, wherein

when the value of N is 0, the current-layer CU whose depth is N is a CU64, and the sub-CU whose depth is N+1 is a CU32; or

when the value of N is 1, the current-layer CU whose depth is N is a CU32, and the sub-CU whose depth is N+1 is a CU16; or

when the value of N is 2, the current-layer CU whose depth is N is a CU16, and the sub-CU whose depth is N+1 is a CU8.

10. A video coding apparatus, comprising:

an intra-frame predictive coding unit, configured to perform a traversal prediction on a current-layer coding unit CU whose depth is N to acquire a first prediction result of the current-layer CU, wherein the traversal prediction does not comprise prediction performed by using the current-layer CU as a prediction unit, the first prediction result comprises a best CU division mode that is of the current-layer CU and in the traversal prediction, a prediction mode of a sub-CU that is divided from the current-layer CU according to the best CU division mode, and a syntax element that is needed for coding of the current-layer CU, the prediction mode comprises a luma mode and a chroma mode, and a value of N is 0, 1, or 2;

a determining unit, configured to: if the best CU division mode is to divide the current-layer CU into four sub-CUs whose depth is N+1, and a difference between luma modes of any two sub-CUs of the four sub-CUs whose depth is N+1 is less than a preset threshold, determine a second prediction mode according to prediction modes of the four sub-CUs whose depth is N+1, wherein a luma mode in the second prediction mode is determined according to luma modes of the four sub-CUs whose depth is N+1, and a chroma mode in the second prediction mode is determined according to chroma modes of the four sub-CUs whose depth is N+1, wherein

the intra-frame predictive coding unit is further configured to perform prediction in a specified prediction mode, by using the second prediction mode as the specified prediction mode, on the four sub-CUs whose depth is N+1 to acquire a second prediction result, wherein the second prediction result comprises a syntax element that is needed for coding of the current-layer CU in the best CU division mode and the second prediction mode;

and

a video coding unit, configured to perform coding, by using the current-layer CU as a coding unit, on the current-layer CU according to the best CU division mode, the second prediction mode, and the syntax element that is needed for coding of the current-layer CU and is in the second prediction result.

11. The video coding apparatus according to claim 10, wherein the video coding apparatus further comprises:

a first determining unit, configured to determine whether the best CU division mode is to divide the current-layer CU into the four sub-CUs whose depth is N+1; and

a second determining unit, configured to determine whether a difference between luma modes of any two sub-CUs of the four sub-CUs whose depth is N+1 is less than the preset threshold.

12. The video coding apparatus according to claim 10 or 11, wherein
when the value of N is 0, the current-layer CU whose depth is N is a CU64, and the sub-CU whose depth is N+1 is a CU32; or
when the value of N is 1, the current-layer CU whose depth is N is a CU32, and the sub-CU whose depth is N+1 is a CU16; or
when the value of N is 2, the current-layer CU whose depth is N is a CU16, and the sub-CU whose depth is N+1 is a CU8.

13. The video coding apparatus according to any one of claims 10 to 12, wherein the determining unit is specifically configured to determine one of the following values as the luma mode in the second prediction mode:

a maximum value of the luma modes of the four sub-CUs whose depth is N+1; or
a minimum value of the luma modes of the four sub-CUs whose depth is N+1; or
an intermediate value of the luma modes of the four sub-CUs whose depth is N+1; or
a minimum integer that is not less than an average value of the luma modes; or
a maximum integer that is not greater than an average value of the luma modes,
wherein
the luma average value is one of an arithmetic average value, a geometric average value, a harmonic average value, a weighted average value, or a square average value that is of the luma modes of the four sub-CUs whose depth is N+1.

14. The video coding apparatus according to any one of claims 10 to 13, wherein the determining unit is specifically configured to determine, as the chroma mode in the second prediction mode, one of the luma modes of the four sub-CUs whose depth is N+1 and that are of the current-layer CU.

FIG. 1

CTU

(a)

(b)

CU64

CU32

CU16

CU8

(c)

FIG. 2

0: planar
1: DC

FIG. 3

FIG. 4

Perform traversal prediction on a current-layer coding unit CU whose depth is N to acquire a prediction result of the current-layer CU, where the traversal prediction does not include a prediction performed by using the current-layer CU as a prediction unit, the prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, and a value of N is 0, 1, or 2

501

If the best CU division mode is to divide the current-layer CU into four sub-CUs whose depth is N+1, and prediction modes of the four sub-CUs whose depth is N+1 are the same, perform coding, by using the current-layer CU as a coding unit, on the current-layer CU according to the best CU division mode, the prediction mode of the CU that is divided from the current-layer CU according to the best CU division mode, and the syntax element that is needed for coding of the current-layer CU

502

FIG. 5

Start

601. For a CU64 being a coding unit, perform traversal
INTRA prediction on a division mode except the CU64 to
acquire a prediction result

602. Whether a best
division mode is to divide the CU64 into
four CU32s

No

Yes

603. Whether
prediction modes of the four CU32s are
the same

No

Yes

604. Perform coding according to the CU64

End

FIG. 6

Perform traversal prediction on a current-layer coding unit CU whose depth is N to acquire a first prediction result of the current-layer CU, where the traversal prediction does not include a prediction performed by using the current-layer CU as a prediction unit, the first prediction result includes a best CU division mode that is of the current-layer CU and in the traversal prediction, a prediction mode of a sub-CU that is divided from the current-layer CU according to the best CU division mode, and a syntax element that is needed for coding of the current-layer CU, the prediction mode includes a luma mode and a chroma mode, and a value of N is 0, 1, or 2 — 701

If the best CU division mode is to divide the current-layer CU into four sub-CUs whose depth is N+1, and a difference between luma modes of any two sub-CUs of the four sub-CUs whose depth is N+1 is less than a preset threshold, determine a second prediction mode according to prediction modes of the four sub-CUs whose depth is N+1, where a luma mode in the second prediction mode is determined according to luma modes of the four sub-CUs whose depth is N+1, and a chroma mode in the second prediction mode is determined according to chroma modes of the four sub-CUs whose depth is N+1 — 702

Perform prediction in a specified prediction mode, by using the second prediction mode as the specified prediction mode, on the four sub-CUs whose depth is N+1 to acquire a second prediction result, where the second prediction result includes a syntax element that is needed for coding of the current-layer CU in the best CU division mode and the second prediction mode — 703

Perform coding, by using the current-layer CU as a coding unit, on the current-layer CU according to the best CU division mode, the second prediction mode, and the syntax element that is needed for coding of the current-layer CU and is in the second prediction result — 704

FIG. 7

```
                    ┌─────────────────┐
                    │      Start      │
                    └────────┬────────┘
                             │
                             ▼
  ┌──────────────────────────────────────────────────────┐
  │  801. For a CU64 being a coding unit, perform         │
  │  traversal INTRA prediction on a division mode        │
  │  except the CU64 to acquire a first prediction result │
  └──────────────────────────┬───────────────────────────┘
                             │
                             ▼
```

802. Whether a best division mode is to divide the CU64 into four CU32s

No

Yes

803. Whether luma modes of the four CU32s are similar

No

Yes

804. Determine a second prediction mode according to prediction modes of the four CU32s, and perform prediction, by using the second prediction mode as a specified prediction mode, on the four CU32s to acquire a second prediction result

805. Perform coding according to the CU64

End

FIG. 8

```
┌─────────────────────────────────────────────┐
│  ┌───────────────────────────────────────┐  │
│  │  Intra-frame predictive coding unit 901 │  │
│  └───────────────────────────────────────┘  │
│  ┌ ─ ─ ─ ─ ─ ─ ─ ─ ─ ─ ─ ─ ─ ─ ─ ─ ─ ─ ┐  │
│  │      First determining unit 903        │  │
│  └ ─ ─ ─ ─ ─ ─ ─ ─ ─ ─ ─ ─ ─ ─ ─ ─ ─ ─ ┘  │          900
│  ┌ ─ ─ ─ ─ ─ ─ ─ ─ ─ ─ ─ ─ ─ ─ ─ ─ ─ ─ ┐  │
│  │     Second determining unit 904        │  │
│  └ ─ ─ ─ ─ ─ ─ ─ ─ ─ ─ ─ ─ ─ ─ ─ ─ ─ ─ ┘  │
│  ┌───────────────────────────────────────┐  │
│  │         Video coding unit 902           │  │
│  └───────────────────────────────────────┘  │
└─────────────────────────────────────────────┘
```

FIG. 9

```
┌─────────────────────────────────────────────┐
│  ┌───────────────────────────────────────┐  │
│  │ Intra-frame predictive coding unit 1001 │  │
│  └───────────────────────────────────────┘  │
│  ┌ ─ ─ ─ ─ ─ ─ ─ ─ ─ ─ ─ ─ ─ ─ ─ ─ ─ ─ ┐  │
│  │      First determining unit 1004       │  │
│  └ ─ ─ ─ ─ ─ ─ ─ ─ ─ ─ ─ ─ ─ ─ ─ ─ ─ ─ ┘  │
│  ┌ ─ ─ ─ ─ ─ ─ ─ ─ ─ ─ ─ ─ ─ ─ ─ ─ ─ ─ ┐  │          1000
│  │     Second determining unit 1005       │  │
│  └ ─ ─ ─ ─ ─ ─ ─ ─ ─ ─ ─ ─ ─ ─ ─ ─ ─ ─ ┘  │
│  ┌───────────────────────────────────────┐  │
│  │          Determining unit 1002          │  │
│  └───────────────────────────────────────┘  │
│  ┌───────────────────────────────────────┐  │
│  │         Video coding unit 1003          │  │
│  └───────────────────────────────────────┘  │
└─────────────────────────────────────────────┘
```

FIG. 10

1100

| Communications interface 1101 | Processor 1102 |
| :---: | :---: |

1104

Memory 1103

FIG. 11

1200

| Communications interface 1201 | Processor 1202 |
| :---: | :---: |

1204

Memory 1203

FIG. 12

# INTERNATIONAL SEARCH REPORT

| International application No. |
|---|
| PCT/CN2014/091769 |

**A. CLASSIFICATION OF SUBJECT MATTER**

H04N 19/61 (2014.01) i

According to International Patent Classification (IPC) or to both national classification and IPC

**B. FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNKI, CNPAT, CNABS, VEN, WPI, EPODOC: inner, frame, forecast, video, code, encode, division pattern, current layer, divide, syntax element, light, chroma, hevc

**C. DOCUMENTS CONSIDERED TO BE RELEVANT**

| Category* | Citation of document, with indication, where appropriate, of the relevant passages | Relevant to claim No. |
|---|---|---|
| PX | CN 104023241 A (HUAWEI TECHNOLOGIES CO LTD) 03 September 2014 (03.09.2014) the whole document | 1-14 |
| A | CN 103597827 A (MEDIATEK INC.) 19 February 2014 (19.02.2014) the whole document | 1-14 |
| A | CN 103338371 A (UNIV DONGHUA) 02 October 2013 (02.10.2013) the whole document | 1-14 |
| A | CN 102740078 A (UNIV NORTH CHINA TECHNOLOGY) 17 October 2012 (17.10.2012) the whole document | 1-14 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 02 February 2015 | 27 February 2015 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WU, Xunxun<br><br>Telephone No. (86-10) 62089960 |

Form PCT/ISA /210 (second sheet) (July 2009)

**INTERNATIONAL SEARCH REPORT**
Information on patent family members

| International application No. |
| --- |
| PCT/CN2014/091769 |

| Patent Documents referred in the Report | Publication Date | Patent Family | Publication Date |
| --- | --- | --- | --- |
| CN 104023241 A | 03 September 2014 | None | |
| CN 103597827 A | 19 February 2014 | US 2014146891 A1 | 29 May 2014 |
| | | AU 2012267006 A1 | 17 October 2013 |
| | | JP 2014514833 A | 19 June 2014 |
| | | KR 2014005296 A | 14 January 2014 |
| | | EP 2719184 A1 | 16 April 2014 |
| | | WO 2012167712 A1 | 13 December 2012 |
| CN 103338371 A | 02 October 2013 | None | |
| CN 102740078 A | 17 October 2012 | CN 102740078 B | 22 October 2014 |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201410233802